# EUROPEAN PATENT SPECIFICATION

(11) **EP 0 560 901 B1**
(45) Date of publication and mention of the grant of the patent: **14.05.1997**
(21) Application number: 92901781.2
(22) Date of filing: 06.12.1991
(51) Int. Cl.: B65D 85/00, A23B 7/148

(54) **Packages with temparature-sensitive permeability for foods and flowers**
Verpackungen für Lebensmitteln oder Blumen mit Temperaturabhängiger Permeabilität
Emballages à permeabilité sensible à la temparature pour alissents ou fleurs

(30) Priority: 07.12.1990 US 623602
(43) Date of publication of application: 22.09.1993
(73) Proprietor: LANDEC LABS. INC., Menlo Park California 94025 (US)
(72) Inventor: STEWART, Ray, F., Redwood City, CA 94061 (US)
(74) Representative: Hall, Robert Leonard
(86) International application number: US9109218
(87) International publication number: WO9210414

(56) References cited:
- EP-A- 0 270 764
- US-A- 4 830 855
- US-A- 4 883 674
- Food Technology issued September 1988, ZAGORY et al. "Modified Atmossphere Packaging of Fresh Produce" see page 70-74, 76, and 77.

## Description

This invention relates to the packaging of biological materials which are actively respiring, in particular foods and flowers, e.g. potatoes, strawberries, lettuce, meat, poultry and dairy products.

The storage of such biological materials presents a problem, because the rate at which such materials deteriorate depends inter alia upon the nature of the atmosphere surrounding the material. It is known in principle that improved storage life can be obtained through the use of containers whose permeability to gases in the outside atmosphere and/or to gases generated by the stored material is selected so as to produce a more favorable atmosphere within the container. For examples of the many attempts to exploit this principle, reference may be made to US-A-2611709, US-A-3681092, US-A-4079152, US-A-4136203, US-A-4883674 and EP-A-270764. However, past attempts to exploit this principle have met with only limited success.

We have now realized, in accordance with the present invention, that improved results can be obtained through the use of a container which comprises areas comprising a crystalline polymer having a first order transition point of -10°C to 40°C and a heat of fusion of at least 5 J/g. Particularly suitable polymers of this type are side chain crystallizable polymers (often referred to as SCC polymers).

SCC polymers are in themselves well known, and their use in connection with a different problem is disclosed in US-A-4830855. In US-A-4830855, an active agent is placed within a container comprising an SCC polymer. The resulting package remains intact at all times, and the active agent is released through the SCC polymer at a rate which depends upon temperature.

In a first preferred aspect, this invention provides a package which is surrounded by air and which comprises
(1) a container which retains its shape at temperatures between 0°C and 40°C, and
(2) within the container, a biological material which is actively respiring and which is selected from foods and flowers;
said container comprising one or more areas which provide the only way in which oxygen, carbon dioxide and water vapor from the air can enter or leave the container, and at least one of said areas being a first area
(a) which is composed of a polymeric material which comprises a crystalline polymer having a first order transition point Tₘ from -10°C to 40°C, preferably 0° to 35°C, e.g. 10° to 25°C, and a heat of fusion of at least 5 J/g, preferably at least 20 J/g,
(b) through which oxygen, carbon dioxide and water vapor can pass, and
(c) which has a permeability to at least one of oxygen and carbon dioxide which increases by a factor of at least 2.5, preferably at least 3, over a temperature range of 10°C between 0°C and 40°C.

In a second preferred aspect, this invention provides a food which is actively respiring, which is surrounded by air, and which has a coating thereon of a polymeric material which
(a) comprises a crystalline polymer having a melting point Tₘ from 0° to 40°C, preferably 0 to 35°C, e.g. 10 to 25°C, and a heat of fusion of at least 5 J/g, preferably at least 20 J/g, and
(b) has a permeability to at least one of oxygen and carbon dioxide which increases by a factor of at least 2.5, preferably at least 3, over a temperature range of 10°C between 0° and 40°C.

In a third preferred aspect, the invention relates to the use, for the packaging of actively respiring foods and flowers, of a container as defined in the first preferred aspect of the invention.

The melting behavior of the crystalline polymers used in this invention is determined by means of a differential scanning calorimeter (DSC) at a heating rate of 10°C per minute. The onset of melting is designated Tₒ, the crystalline melting point (i.e. the peak of the DSC curve) is designated Tₘ, and the completion of melting (i.e. the end of the DSC peak) is designated T_{f}. The heat of fusion is the heat absorbed by the melting of the polymer between Tₒ and T_{f}. The value of T_{f}-Tₒ, i.e. the temperature range over which melting takes place, can be more or less than 10°C. Generally, the permeability begins to increase in the region of Tₒ and continues to increase up to and beyond Tₘ.

Depending on the type of product being preserved and the result desired, a sharp or gradual melting may be preferred. If rapid melting is preferred, the melting should occur over a relatively narrow temperature range, less than 10 centigrade degrees, preferably less than 5 centigrade degrees.

The present invention makes it possible for the biological material to be surrounded by an environment which adjusts to the respiration of the biological material and which will change gradually, slightly, or dramatically with changes in temperature as a result of reversible changes in the permeability of said first area or areas of the container. Depending on the nature of the crystalline polymer in the first area, its permeability can change relatively gradually or relatively rapidly in the region of the first order transition point of the polymer. For example, the polymer can be designed to be substantially impermeable to a given gas, e.g. O₂, at a temperature substantially below Tₘ and then become substantially permeable to the same gas at a temperature closer to or above Tₘ. The polymer can undergo one or more phase changes.

The crystalline polymer may be a single polymer (i.e. a statistical mixture of polymeric materials of a single type), or a mixture of different polymers which are combined so as to obtain desired permeability and changes in that permeability based on temperature. The crystalline polymers may be homopolymers or copolymers, including random, block and graft co-polymers. In addition, the crystalline polymers may be combined with other polymers to form blends or laminates which can be used in producing the packages of the invention.

The crystalline polymers are generally formed into films which have a permeability to oxygen at 25°C of at least 0.25 ml.µm/Pa.m².day (1000 ml.mil/m².day .atm). Materials with significantly lower permeability require too much surface area to be generally useful in most packaging applications which require active gas exchange. Preferably the film has a permeability to oxygen at Tₘ of at least 1.25 ml.µm/Pa.m².day (5,000 ml.ml/m².day.atm). Preferably the film (a) has a permeability to oxygen which is q ml.µm/Pa.m².day (p ml·mil/m²·day·atm) at 0°C and which increases by at least 0.07 q (0.07 p) for each 1°C rise in temperature from 0°C to 40°C, and/or (b) has a permeability to water vapor which is at least z ml.µm/Pa.m².day (y ml·mil/m²·day·atm) at 0°C and which increases by at least 0.07 z (0.07 y) for each 1°C rise in temperature from 0°C to 40°C. Preferably the polymers are bondable or heat sealable. The crystalline polymers may be cross-linked and oriented or expanded to render them heat-shrinkable by known methods.

The packages of the invention can be produced in a variety of ways. For example, a flexible sheet of a side-chain crystallizable polymer can be wrapped around the biological material. Other examples are packages in which the containers are bags or walled structures in the form of cubes and/or rectangular blocks comprised completely of the crystalline polymer or comprised in part of other materials and having one or more windows of the crystalline polymer.

The SCC polymers preferably used in this invention have the following general structural formula: 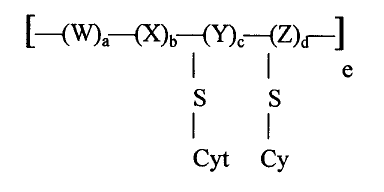 wherein W and X are each respectively a first and a second monomer unit, which monomer unit may be any molecular moiety connectable to an adjoining molecular moiety (i.e., polymerizable), Y ad Z are each independently a backbone monomer unit which may be any molecular moiety or atom, each S is independently a linking group or spacer unit and is optionally present, Cyt and Cy are each independently a crystallizable moiety connected to the respective backbone directly or via the spacer unit, and a, b, c, d and e are each, independently, integers ranging from 0-1,000 with the proviso that sufficient Cyt and Cy are present so as to provide a Mw which is equal to or greater than twice the sum of the Mws of W, X, Y and Z, and further wherein the polymers have a heat of fusion of at least 5 joules/gram, preferably at least 10 joules/gram. It is to be understood that when the variables a, b, c and d are greater than 1, the monomer units W, X, Y and Z can be repeating units or mixtures of different monomer units, for example, a mixture of styrene, vinyl acetate, acrylic acid, methyl styrene and hexadecyl acrylate in ratios of 5:5:2:5:83. Thus, any of the monomer units W, X, Y and Z can be mixtures of polymerizable monomers.

The crystalline polymers used in this invention preferably have a Mw greater than 250,000 and are optionally cross-linked. There are a number of factors which affect the permeability of the polymer. For example, when the polymer has the above general structural formula and side chain Cy and/or Cyt are/is a simple aliphatic hydrocarbon, the longer the carbon chain, the higher the melting point and the greater the permeability changes the polymer will undergo. Use of very regular polymers (e.g. polymers having a large percentage of 14C chains) give rise to polymers with sharp permeability changes whereas polymers with less regular structure (mixtures of various carbon chain links) give rise to broad permeability ranges. Narrow or broad permeability ranges may be desirable depending upon the particular biological material being packaged. In general, as "a" and "b" increase (other factors being held constant), the permeability change will become smaller.

The backbone of the polymer (defined by W, X, Y and Z) may be any organic structure (aliphatic or aromatic hydrocarbon, ester, ether, amide, etc.) or an inorganic structure (sulfide, phosphazine, silicone, etc.). The spacer linkages can be any suitable organic or inorganic unit, for example ester, amide hydrocarbon, phenyl, ether, or ionic salt (for example a carboxyl-alkyl ammonium or sulfonium or phosphonium ion pair or other known ionic salt pair). The side-chain (defined by Cyt and Cy and an optionally present S) may be aliphatic or aromatic or a combination of aliphatic side-chains of at least 10 carbon atoms, fluorinated aliphatic side-chains of at least 6 carbons, and p-alkyl styrene side-chains wherein the alkyl group contains 8 to 24 carbon atoms.

The length of each side-chain moiety is usually greater than 5 times the distance between side-chains in the case of acrylates, methacrylates, vinyl esters, acrylamides, methacrylamides, vinyl ethers and alpha olefins. In the extreme case of a fluoroacrylate alternate copolymer with butadiene, a side chain can be as little as 2 times the length of the distance between branches. In any case, the side-chain units should make up greater than 50% of the volume of the polymer, preferably greater than 65% of the volume. Co-monomers added to a side-chain polymer usually have an adverse effect on crystallinity. Small amounts of various co-monomers can be tolerated, usually up to 10 to 25 volume percent. In some cases it is desirable to add a small amount of co-monomers, for example cure site monomers such as acrylic acid, glycidal methacrylate, maleic anhydride, amino functional monomer and the like.

Specific examples of SCC polymers are the acrylate, fluoroacrylate, methacrylate and vinyl ester polymers described in J. Poly. Sci. (1972) 10:3347; J. Poly. Sci. (1972) 10:1657; J. Poly. Sci. (1971) 9:3367; J. Poly. Sci. (1971) 9:3349; J. Poly. Sci. (1971)9:1835; J.A.C.S. (1964) 76:6280; J. Poly. Sci. (1969) 7:3053; Polymer J. (1985) 17:991, corresponding acrylamide, substituted acrylamide and maleimide polymers (U. Poly. Sci., Poly. Physics Ed. (1980)18:2197; polyalphaolefin polymers such as those described in J. Poly. Sci.: Macromol. Rev. (1974) 8:117-252, and Macromolecules (1980) 13:12, polyalkylvinylethers, polyalkylethylene oxides such as those described in Macromolecules (1980) 13:15, alkyphosphazene polymers, polyamino acids such as those described in Poly. Sci. USSR (1979) 21:241, Macromolecules (1985) 18:2141, polyisocyanates such as those described in Macromolecules (1979) 12:94, polyurethanes made by reacting amine- or alcohol- containing monomers with long-chain alkyl isocyanates, polyesters and polyethers, polysiloxanes and polysilanes such as those described in Macromolecules (1986) 19:611 and p-alkylstyrene polymers such as those described in J.A.C.S. (1953) 75:3326 and J. Poly. Sci. (1962) 60:19.

The main properties of the SCC polymer that are believed to affect its permeability properties are: Tₘ, glass transition point, crystallinity, crosslink density, and side-chain structure. Tₘ will be chosen to correlate to the temperature at which a particular gas permeability is desired. For instance, for a food package to having increased gas permeability at 25°C or above, an SCC polymer having a Tₘ of approximately 25°C is chosen. The percent crystallinity of the polymer (below Tₘ ) will typically be in the range of 10% to 55%, more usually 15% to 50%. In general, the higher the crystallinity, the greater the change in permeability exhibited at phase transition. As indicated below, the crosslink density will typically be greater than about 0.1 to 1. Crosslinking in general decreases permeability at Tₘ. At such crosslink densities, however, the decrease is not sufficient to render the permeability of the polymer substantially insensitive to temperature but is sufficient to significantly reduce the fluidity of the polymer at temperatures above the melt temperature. As indicated above, the chemical structure of the polymer may vary widely. The permeability of the polymer will typically be substantially greater, e.g. at least threefold and more usually at least fivefold higher, at or above its melting point than at temperatures below its melting point.

For use in this invention, the SCC polymer must be in a form in which it retains its shape and is not free to flow at Tₘ.

In one embodiment, the SCC is crosslinked to a degree such that it becomes viscoelastic at Tₘ and is not so fluid that it readily flows in response to mild forces. Accordingly, the term "crosslinked SCC polymer" is used to describe an SCC polymer which is resistant to flow above Tₘ. Preferably the crosslink density of the SCC polymer (i.e. the number of crosslinks per weight average molecular weight) is greater than about 0.1, particularly greater than 0.5, and especially greater than 1. It is not necessary for all of the polymer chains in a material to be crosslinked and a high gel content is not generally necessary unless the application requires great solvent resistance. Generally crosslinking beyond about 10 mole percent is not necessary under normal circumstances and excessive crosslinking can result in decreased crystallinity and impaired performance. In terms of mole percent the crosslinklng will normally be in the range of 0.01 percent to 10 mole percent. The crosslinked polymers will normally have a heat of fusion of at least 5 J/g, preferably at least 10 J/g, more preferably at least 20 J/g.

A variety of methods are available to produce cross-linked SCC polymers. A network copolymer can be prepared by polymerizing a side-chain crystallizable monomer and a multifunctional monomer either in one or two steps. A one-step process may be used to form a membrane in place, while a two-step process is useful where an intermediate processing step is necessary. A variety of multifunctional monomers (di, tri or multifunctional acrylic or methacrylic esters, vinyl ethers, esters or amides, isocyanates, aldehydes, epoxies and the like) are known in the art. These multifunctional monomers can be used on a one or two step process depending on the desired result. Ioniizing radiation, for example beta or gamma radiation, peroxides, silanes or similar cure agents, can be used to crosslink a preformed SCC polymer with or without added co-monomers. Ionic crosslinks can be formed by, for example, reacting an acidic polymer site with a di- or trivalent metal salt or oxide to produce a complex which serves as a crosslink site. Likewise, organic salts or complexes can be prepared by methods known in the art.

An effect similar to crosslinklng may also be obtained by other methods. For example, a block copolymer of an SCC polymer and a second polymer which exhibits a glass transition or melting point higher than the SCC polymer may be prepared wherein the entire mass exhibits mechanical stability above the Tₘ of the SCC polymer but below the transition of the second polymer.

In another form, the SCC polymer is placed within a support such as a microporous membrane, hollow fiber or fabric mesh which immobilizes the polymer by physical entrapment, surface tension, and/or other physical forces. The SCC polymer fills the pores of the membrane or holes in the mesh, thus providing numerous continuous pathways of SCC polymer through the membrane/mesh. The polymer may be placed in the pores/holes by soaking the membrane/mesh in a polymer solution or melt, or forcing the polymer solution or melt into the pores/holes under pressure. The membrane/mesh material may be permeable to the various gases or impermeable. If it is permeable to the gases, gases will permeate through it to the outside environment at a given rate at temperatures below the Tₘ of the SCC polymer. At or above the Tₘ, the gases will permeate through both the membrane/mesh material and SCC polymer filling the pores, thus providing a higher rate of gas release per unit of surface area. If the membrane/mesh material is impermeable to the gases, gases will not permeate through the membrane below the Tₘ of the SCC polymer but at or above Tₘ, the gases will permeate through the membrane via the continuous pathways of SCC polymer.

The membrane or mesh may be made of an electrically conductive material or be coated or contain conductive particles of such material (e.g. carbon, iron, nickel, copper, or aluminum) so that it can be heated by conduction or induction to cause the crystalline polymer material to undergo the desired phase change. When the diffusion matrix is intended to be heated by radiation, materials that enhance radiation adsorption may be incorporated into the matrix.

It is also possible to disperse (blend homogeneously) a crystalline polymer at high volume loadings (e.g., greater than 20%, usually 50% to 90%) in a continuous or cocontinuous phase matrix material that is either permeable or impermeable to the gases. At such high volumes, there are sufficient amounts of the dispersed SCC polymer to form continuous paths of side-chain crystallizable polymer through the matrix. Such dispersions function similarly to the embodiments in which the crystalline polymer is suspended within a porous network or mesh. In this regard, it is necessary that the crystalline polymer be a continuous phase if the second polymer is impermeable to the gasses, and may be dispersed in the second polymer if the second polymer is essentially permeable to the gases.

In a similar manner, a crystalline polymer may be immobilized by creating a second polymer within or throughout the crystalline polymer by polymerization and phase separation. For example, a noncrosslinked SCC polymer may be heated above its melting point with a second monomer or monomer mixture and the monomer(s) caused to polymerize. In this case a supporting polymer network can be created in situ. In this case it is desirable that the second polymer created be at least partially insoluble in the SCC polymer, yet be of a sufficient structure to bind the SCC polymer into a stable form above its melting point.

In another form, a layer of SCC is chemically bonded (grafted) to the surface of a gaspermeable polymer membrane. In this instance, the chemical bonding immobilizes the SCC polymer. The SCC polymer may be grafted to the membrane surface through various functional groups as is known in the art. The particular surface treatments/bonding agents used will vary with the nature of the membrane and the SCC polymer.

The SCC polymer may also be immobilized by laminating it to a gas-permeable polymer or between two gas-permeable polymer membranes that are fused to each other at a plurality of sites so as to prevent relative motion between the membranes when the SCC polymer melts. The fusions may be along continuous lines so as to form a waferlike structure or be at separated points. Depending upon the thickness of the SCC layer in such assemblies, it may be desirable to make such layer out of crosslinked SCC polymer to prevent the SCC polymer from oozing from the edge of the assembly.

The following examples illustrate the invention. Unless indicated otherwise, parts are parts by weight, temperature is in degrees Centigrade, and pressure is at or near atmospheric.

### Example 1

Cellgard 2400 (Hoechst Celanese) was coated with polymethyltetradecyl siloxane (Petrarch Systems) to yield a 0.025 mm (0.001 inch) thick composite film. The resultant film (referred to herein as Film A) had a Tₘ of 20°C. The transition was attributed to the melting of the siloxane polymer contained in the pores of the Cellgard.

### Example 2

An SCC polymer was prepared by heating a mixture of tetradecylacrylate (99 g), acrylic acid (1 g), and azobisisobutyronitrile (0.2 g) in 200 ml of heptane at 65°C for 24 hours. The resultant polymer had a Tₘ of 20.6°C, a heat of fusion of 51.6 J/g, and a molecular weight of 499,000 daltons. Fifty grams of this polymer in heptane solution was combined with 0.05 grams of XAMA 2 (Hoechst Celanese) and coated onto siliconized mylar and dried to form a 0.05 mm thick film which was transfer coated onto a film of Cellgard 2400. The resultant film is referred to herein as Film B.

### Example 3

An SCC polymer having a Tₘ of 30°C was prepared by polymerizing pentadecylacrylate in 1:1 heptane:ethylacetate. A solution of this polymer was coated onto a film of Cellgard 2400 and allowed to dry. Excess polymer was removed to yield a smooth 0.04 mm (0.0015 inch) thick film, which is referred to herein as Film C.

### Example 4

The CO₂ and O₂ permeabilities of films A and B at various temperatures were determined by a steady state diffusion method involving maintaining a partial pressure difference of the test gas across the film, which was fitted with a thermostat, sweeping the downstream side with helium and sampling the downstream side via gas chromatography. Two samples of each film were measured and the average value reported. The results obtained are in Table 1 below and show that the gas permeability of the films increases dramatically in the vicinity of their Tₘ's.

**Table 1**

| Temp. (°C) | Film A Gas Permeability ml.µm/Pa.m².day (ml.mil/m².day.atm) | | | Film B Gas Permeability ml.µm/Pa.m².day (ml.mil/m².day.atm) | | |
|---|---|---|---|---|---|---|
| | CO₂ | O₂ | CO₂/O₂ | CO₂ | O₂ | CO₂/O₂ |
| 3 | 4.96 (19,800) | 0.687 (2,740) | 7.2 | 18.9 (75,500) | 2.83 (11,300) | 6.7 |
| 6 | 7.27 (29,000) | 0.835 (3,330) | 8.7 | 22.4 (89,400) | 3.51 (14,000) | 6.4 |
| 11 | 9.85 (39,300) | 1.35 (5,370) | 7.3 | 30.8 (122,700) | 6.14 (24,500) | 5.0 |
| 18 | 15.24 (60,800) | 2.23 (8,900) | 6.8 | 122.7 (489,500) | 12.3 (49,000) | 10.0 |
| 24 | 57.0 (227,200) | 8.50 (33,900) | 6.7 | 183.8 (733,200) | 41.4 (165,100) | 4.4 |
| 26 | 90.9 (362,700) | 18.6 (74,200) | 4.9 | 236.6 (943,600) | 43.5 (173,600) | 5.4 |

### Example 5

The moisture permeability of Film C was measured at various temperatures above and below the melting point using a moisture vapor permeability cup (ASTM E-96-80). The results obtained are in Table 2, and show that the temperature-induced moisture vapor permeability of Film C increases much more rapidly than commercially available food packaging.

**Table 2**

| (°C) | Moisture Vapor Permeability (x10¹⁴g/Pa.s.m) |
|---|---|
| 10 | 2.8 |
| 20 | 12.1 |
| 30 | 58.6 |
| 37 | 92.3 |

Two 500 ml glass jars were filled 2/3 with button mushrooms. One jar was sealed with commercial saran film and the other with Film A. Both films had a surface area of 28 cm².

Both jars were maintained at about 5°C for 24 hours and then at about 22°C, and were observed daily. After three days, the mushrooms in the saran-covered jar were predominately brown and showed some spots of decomposition. The mushrooms in the other jar showed only slight discoloration. This was attributed to the greater permeability and presumably a lower CO₂ content in the jar. After seven days, the mushrooms in the saran-covered jar were very brown and showed a great accumulation of moisture whereas the mushrooms in the other jar were only slightly discolored and only modest amounts of moisture had accumulated inside the container.

### Example 7

The design of a successful modified atmosphere food package requires the selection of one or more gas exchange membranes such that suitable gas concentrations are maintained over a suitable range of temperatures. Attention must be given to matching the respiration rate, oxygen requirements and carbon dioxide tolerance of the produce over the anticipated temperature range. Table 3 shows the permeabilities of Films A and B to CO₂ and O₂ at 3°C. The permeabilities are given in ml.µm/Pa.m².day (ml.mil/m₂.day.atm).

**Table 3**

| Film | CO₂ | O₂ | CO₂/O₂ |
|---|---|---|---|
| Film A | 4.96 (19,800) | 0.687 (2,740) | 7.2 |
| Film B | 18.9 (75,500) | 2.83 (11,300) | 6.7 |

The sensitivity of the permeability of a film to changes in temperature can be characterized by a Q10 value. A film which doubles its permeability in response to a 10 Centigrade degrees temperature increase has a Q10 value of 2 and so forth. The Q10 values for CO₂ and O₂ of Films A and B over the temperature ranges 3-11°C and 11-24°C are shown in Table 4.

**Table 4**

| Film | CO₂ | O₂ |
|---|---|---|
| Film A (3-11°C) | 2.50 | 2.45 |
| Film A (11-24C) | 4.44 | 4.86 |
| Film B (3-11°C) | 2.03 | 2.71 |
| Film B (11-24°C) | 4.60 | 5.18 |

To design an optimum package, one attempts to match the film permeation characteristics to the properties of the fruit or vegetable. It can be seen that Film A can be advantageously used to prevent the development of anoxic conditions due to its high Q10 value. By using Film A in conjunction with other polymers of lower Q10 values (e.g. polyethylene), various Q10 values can be obtained in any given package construction. Likewise, it is possible to obtain various CO₂/O₂ selectivities by combining varying surface areas of Film B with, for example, polyethylene.

### Example 8

Eight packages, each with an initial volume of 473 ml, were constructed utilizing Film A or a commercially available packaging film ("Cryovac SSD310"). In both packages the surface area of the film was 30.2 cm². Measured quantities of broccoli (cultivar "Citation") were placed in the packages. One of the packages was left open to the air. The packages were maintained at 5° or 29°C and were observed from time to time.

Table 5 below shows the film used, the quantity of broccoli, the storage temperature, and the results of the observations, for each package.

**Table 5**

| Package | Temp (°C) | Time (days) | Observation |
|---|---|---|---|
| A (Film A, 100g. broccoli) | 5 | 1 | Dark green, firm |
| | | 6 | Dar green, firm, moist |
| | 20 | 2 | Dark green, firm |
| | | 4 | Dark green, firm, moist |
| C (55D310 film, 70.1 g broccoli) | 5 | 1 | Dark green, firm |
| | | 6 | Dark green, firm, moist |
| | 20 | 2 | Dark green, firm, wet |
| | | 4 | Beginning to yellow, soft, wet |
| B (Film A, 7.4g broccoli) | 20 | 2 | Dark green, firm |
| | | 4 | Green, purple, yellow, firm |
| D (55D310 film, 5.3g broccoli) | 20 | 2 | Green, stem browning in spots |
| | | 4 | Green, purple, yellow, soft, stem brown |
| E (Open to air) | 5 | 4 | Dark green, dried out and wilted |
| | | 6 | Purple, yellow green |
| | 20 | 2 | Purple and green |
| | | 4 | Yellow, moldy |

In each case, the broccoli in the packages made with Film A was judged to be "fresher" when stored at 20°C. This is attributed to the higher permeability of the film at that temperature. At the lower temperature, both films provide improved storage relative to the control.

### Example 9

This Example provides an example of a polymeric film which can be used to form packages of this invention and which does not contain an SCC polymer.

Tetrahydrofuran and 2-methyltetrahydrofuran were copolymerized to form a linear polymer with a molecular weight of 54,000 and a Tₘ of 28°C. A film of the polymer 0.025 mm (0.001 inch) thick was laminated onto a microporous polypropylene support. Table 6 shows the oxygen permeabilities of two such films at 5°, 20°, and 30°C. The permeabilities are given in ml.µm/Pa.m².day (ml.mil/m².day.atm) and it can be seen that they increase dramatically above Tₘ.

**Table 6**

| Film # | O₂ Permeability | | |
|---|---|---|---|
| | 5°C | 20°C | 30°C |
| 1 | 0.940 (3750) | 1.687 (6730) | 6.469 (25,800) |
| 2 | 1.1985 (4780) | 1.785 (7120) | 6.6195 (26,400) |

The melting point (and the resulting permeability change) can be selected by varying the copolymer composition. A variety of chain-extended polyurethanes can be prepared from crystallizable polyethers such as polytetrahydrofuran, polyethylene-oxide and their copolymers. Resistance to flow above the soft segment melting point may be attained by reaction with, for example, di- or multifunctional isocyantes.

## Claims

1. A package which is surrounded by air and which comprises
(1) a container which retains its shape at temperatures between 0°C and 40°C, and
(2) within the container, a biological material which is actively respiring and which is selected from foods and flowers;
said container comprising one or more areas which provide the only way in which oxygen, carbon dioxide and water vapor from the air can enter or leave the container, and at least one of said areas being a first area
(a) which is composed of a polymeric material which comprises a crystalline polymer having a first order transition point Tₘ from -10°C to 40°C and a heat of fusion of at least 5 J/g,
(b) through which oxygen, carbon dioxide and water vapor can pass, and
(c) which has a permeability to at least one of oxygen and carbon dioxide which increases by a factor at least 2.5, preferably at least 3, over a temperature range of 10°C between 0°C and 40°C.

2. A package according to claim 1 wherein the crystalline polymer has a Tₘ from 10° to 25° and a heat of fusion of at least 20 J/g.

3. A package according to claim 1 or 2 wherein the first area is in the form of a film which has a permeability to oxygen at 25°C of at least 0.25 ml.µm/Pa.m².day (1,000 ml·mil/m²·day·atm), and which preferably has a permeability to oxygen at Tₘ of at least 1.254 ml.µm/Pa.m².day (5,000 ml·mil/m²·day·atm).

4. A package according to claim 1, 2 or 3 wherein the first area is in the form of a film which (a) has a permeability to oxygen which is at least q ml.µm/Pa.m².day at 0°C and which increases by at least 0.07 q for each 1°C rise in temperature from 0°C to 40°C, and/or (b) has a permeability to water vapor which is at least z ml.µm/Pa.m².day at 0°C and which increases by at least 0.07 z for each 1°C rise in temperature from 0°C to 40°C.

5. A package according to any one of claims 1 to 4 wherein the crystalline polymer is a side chain crystallizable polymer.

6. A package according to any one of claims 1 to 5 wherein the crystalline polymer begins to melt at a temperature Tₒ °C and completes melting at a temperature T_{f}°C, and T_{f}-Tₒ is less than 10°C, preferably less than 5°C.

7. A package according to any one of claims 1 to 6 wherein the crystalline polymer has been crosslinked or is associated with a support which immobilizes the polymer by physical forces at temperatures of Tₘ and above.

8. A package according to any one of claims 1 to 7 wherein the container
(a) is a sheet or bag consisting essentially of said polymeric material;
(b) consists essentially of (i) material which is substantially impermeable to oxygen and carbon dioxide, and (ii) a single first area; or
(c) consists essentially of (i) material which is substantially impermeable to oxygen and carbon dioxide, (ii) a single first area, and (iii) at least one area composed of another polymeric material.

9. A food which is actively respiring, which is surrounded by air, and which has a coating thereon of a polymeric material which
(a) comprises a crystalline polymer having a first order transition point Tₘ from 0° to 40°C, preferably 0 to 35°C, e.g. 10 to 25°C, and a heat of fusion of at least 5 J/g, preferably at least 20 J/g, and
(b) has a permeability to at least one of oxygen and carbon dioxide which increases by a factor of at least 2.5, preferably at least 3, over a temperature range of 10°C between 0° and 40°C.

10. The use, for the packaging of a biological material which is actively respiring and which is selected from foods and flowers, of a container comprising one or more areas which provide the only way in which oxygen, carbon dioxide and water vapor from the air can enter or leave the container, at least one of said areas being a first area
(a) which is composed of a polymeric material which comprises a crystalline polymer having a first order transition point Tₘ from-10°C to 40°C and a heat of fusion of at least 5 J/g,
(b) through which oxygen, carbon dioxide and water vapor can pass, and
(c) which has a permeability to at least one of oxygen and carbon dioxide which increases by a factor at least 2.5, preferably at least 3, over a temperature range of 10°C between 0°C and 40°C.

## Patentansprüche

1. Verpackung, die Von Luft umgeben ist und folgendes umfaßt:
(1) einen Behälter, der seine Form bei Temperaturen zwischen 0°C und 40°C beibehält, und
(2) innerhalb des Behälters ein biologisches Material, das aktiv atmet und aus Lebensmitteln und Blumen ausgewählt ist,
wobei der Behälter eine oder mehrere Bereiche aufweist, die den einzigen Weg ausbilden, über den Sauerstoff, Kohlenstoffdioxid und Wasserdampf aus der Luft in den Behälter eintreten oder diesen verlassen kann, und wobei wenigstens einer dieser Bereiche einen ersten Bereich darstellt,
(a) der aus polymerem Werkstoff besteht, welcher ein kristallines Polymer mit einem Übergangspunkt erster Ordnung Tₘ von -10°C bis 40°C und eine Schmelzwärme von wenigstens 5 J/g aufweist,
(b) durch den Sauerstoff, Kohlenstoffdioxid und Wasserdampf hindurchtreten kann, und
(c) der eine Durchlässigkeit für wenigstens eines der Medien Sauerstoff und Kohlenstoffdioxid aufweist, die um einen Faktor von wenigstens 2,5, bevorzugt von wenigstens 3, über einen Temperaturbereich von 10°C zwischen 0°C und 40°C zunimmt.

2. Verpackung nach Anspruch 1, bei der das kristalline Polymer ein Tₘ von 10°C bis 25°C und eine Schmelzwärme von wenigstens 20 J/g aufweist.

3. Verpackung nach Anspruch 1 oder 2, bei welcher der erste Bereich in Form eines Films ausgebildet ist, der eine Durchlässigkeit für Sauerstoff bei 25°C von wenigstens 0,25 ml·µm/Pa·m²·Tag (1.000 ml·mil/m²·Tag·atm), und bevorzugt eine Durchlässigkeit für Sauerstoff bei Tₘ von wenigstens 1,254 ml·µm/Pa·m²·Tag (5.000 ml·mil/m²·Tag·atm) aufweist.

4. Verpackung nach Anspruch 1, 2 oder 3, bei welcher der erste Bereich in Form eines Films ausgebildet ist, der (a) eine Durchlässigkeit für Sauerstoff aufweist, die wenigstens q ml·µm/Pa·m²·Tag bei 0°C beträgt und um wenigstens 0,07 q für jedes 1°C Temperaturanstieg von 0°C bis 40°C ansteigt, und/oder (b) eine Durchlässigkeit für Wasserdampf aufweist, die wenigstens z ml·µm/Pa·m²·Tag bei 0°C beträgt und um wenigstens 0,07 z für jedes 1°C Temperaturanstieg von 0°C bis 40°C ansteigt.

5. Verpackung nach einem der Ansprüche 1 bis 4, bei der das kristalline Polymer ein seitenketten-kristallisierbares Polymer ist.

6. Verpackung nach einem der Ansprüche 1 bis 5, bei welcher das kristalline Polymer bei einer Temperatur Tₒ°C zu schmelzen beginnt und das Schmelzen bei einer Temperatur T_{f}°C beendet ist, und wobei T_{f}-Tₒ kleiner als 10°C, bevorzugt kleiner als 5°C, ist.

7. Verpackung nach einem der Ansprüche 1 bis 6, bei der das kristalline Polymer vernetzt oder mit einem Träger vereinigt ist, der das Polymer durch physikalische Kräfte bei Temperaturen von Tₘ und darüber unbeweglich macht.

8. Verpackung nach einem der Ansprüche 1 bis 7, bei welcher der Behälter
(a) ein Blatt oder Beutel ist, das bzw. der im wesentlichen aus dem polymeren Werkstoff besteht,
(b) im wesentlichen aus (i) einem Material, das im wesentlichen für Sauerstoff und Kohlenstoffdioxid undurchlässig ist, sowie aus (ii) einem einzigen ersten Bereich besteht, oder
(c) im wesentlichen aus (i) einem Material, das im wesentlichen für Sauerstoff und Kohlenstoffdioxid undurchlässig ist, (ii) einem einzigen ersten Bereich und (iii) wenigstens aus einem Bereich besteht, der aus einem anderen polymeren Werkstoff besteht.

9. Lebensmittel, das aktiv atmet und von Luft umgeben ist sowie mit einem auf ihm angebrachten Überzug aus polymerem Werkstoff versehen ist, der
(a) aus einem kristallinen Polymer besteht, das einen Übergangspunkt erster Ordnung Tₘ von 0° bis 40°C, bevorzugt 0° bis 35°C, d.h. 10° bis 25°C, und eine Schmelzwärme von wenigstens 5 J/g, bevorzugt von wenigstens 20 J/g, aufweist, und
(b) eine Durchlässigkeit für wenigstens eines der Medien Sauerstoff und Kohlenstoffdioxid aufweist, die um einen Faktor von wenigstens 2,5, bevorzugt von wenigstens 3, über einen Temperaturbereich von 10°C zwischen 0°C und 40°C zunimmt.

10. Verwendung eines Behälters zur Verpackung eines biologischen Materiales, das aktiv atmet und ausgewählt ist aus Lebensmitteln und Blumen, wobei der Behälter einen oder mehrere Bereich aufweist, welche den einzigen Weg darstellen, über den Sauerstoff, Kohlenstoffdioxid und Wasserdampf aus der Luft in den Behälter eintreten oder diesen verlassen kann, wobei wenigstens einer dieser Bereiche einen ersten Bereich bildet,
(a) der aus einem polymeren Werkstoff besteht, welcher ein kristallines Polymer aufweist, das einen Übergangspunkt erster Ordnung Tₘ von -10°C bis 40°C und eine Schmelzwärme von wenigstens 5 J/g aufweist,
(b) durch den Sauerstoff, Kohlenstoffdioxid und Wasserdampf hindurchtreten können, und
(c) der eine Durchlässigkeit für wenigstens eines der Medien Sauerstoff und Kohlenstoffdioxid aufweist, die um einen Faktor von wenigstens 2,5, bevorzugt von wenigstens 3, über einen Temperaturbereich von 10°C zwischen 0°C und 40°C ansteigt.

## Revendications

1. Emballage disposé dans l'air ambiant et comprenant :
(1) un conteneur de dimensions stables à des températures comprises entre 0 et 40°C, et
(2) dans ledit conteneur, un matériau biologique qui respire de façon active et qui est choisi parmi des aliments et des fleurs ;
ledit conteneur comprenant une ou plusieurs zones de passage obligé pour les échanges d'oxygène, de dioxyde de carbone et de vapeur d'eau entre l'air ambiant et le conteneur, et au moins une de ses zones étant une première zone
(a) qui est composé d'un matériau polymère comprenant un polymère cristallin présentant une température de transition du premier ordre Tₘ de -10°C à 40°C et une chaleur de fusion d'au moins 5 J/g,
(b) à travers laquelle l'oxygène, le dioxyde de carbone et la vapeur d'eau peuvent passer, et
(c) qui présente une perméabilité vis-à-vis d'au moins un gaz parmi l'oxygène et le dioxyde de carbone qui augmente d'un facteur d'au moins 2,5, de préférence d'au moins 3, sur une plage de température de 10°C entre 0°C et 40°C.

2. Emballage selon la revendication 1 dans lequel le polymère cristallin a une température de transition Tₘ de 10 à 25° et une chaleur de fusion d'au moins 20 J/g.

3. Emballage selon la revendication 1 ou 2 dans lequel la première zone se présente sous la forme d'une pellicule qui a une perméabilité vis-à-vis de l'oxygène à 25°C d'au moins 0,25 ml.µm/Pa.m².jour (1 000 ml.mil/m².jour.atm ), et qui de préférence a une perméabilité vis-à-vis de l'oxygène à la température Tₘ d'au moins 1 254 ml.µm/Pa.m².jour (5 000 ml. mil/m².jour.atm )

4. Emballage selon l'une des revendications 1, 2 ou 3 dans lequel la première zone se présente sous la forme d'une pellicule qui (a) a une perméabilité vis-à-vis de l'oxygène d'au moins q ml.µm/Pa.m².jour à 0°C et qui augmente d'au moins 0,07 q par augmentation de 1°C de la température dans la plage allant de 0 à 40°C, et/ou (b) a une perméabilité vis-à-vis de la vapeur d'eau qui est d'au moins de z ml.µm/Pa.m².jour à 0°C et qui augmente d'au moins 0,07 z par augmentation de 1°C de la température entre 0 et 40°C.

5. Emballage selon l'une quelconque des revendications 1 à 4 dans lequel le polymère cristallin est un polymère à chaîne latérale cristallisable.

6. Emballage selon l'une quelconque des revendications 1 à 5 dans lequel le polymère cristallin est tel que T_{f}-T₀ est inférieur à 10°C, de préférence inférieur à 5°C, T₀°C représentant la température à laquelle le polymère cristallin commence à fondre et T_{f}°C marquant la fin de la fusion.

7. Emballage selon l'une quelconque des revendications 1 à 6 dans lequel le polymère cristallin a été réticulé ou est associé à un support qui immobilise physiquement le polymère à des températures supérieures ou égales à Tₘ.

8. Emballage selon l'une quelconque des revendications 1 à 7 dans lequel le conteneur
(a) est une feuille ou un sachet constitué essentiellement dudit matériau polymère ;
(b) consiste essentiellement en (i) un matériau qui est pratiquement imperméable à l'oxygène et au dioxyde de carbone, et (ii) une première zone séparée ; ou
(c) consiste essentiellement en (i) un matériau qui est pratiquement imperméable à l'oxygène et au dioxyde de carbone, (ii) une première zone séparée et (iii) au moins une zone composée d'un autre matériau polymère.

9. Aliment qui respire de façon active, disposé dans l'air ambiant, et qui est revêtu d'un matériau polymère qui
(a) comprend un polymère cristallin présentant une température de transition du premier ordre Tₘ comprise entre 0 et 40°C, de préférence entre 0 et 35°C, par exemple entre 10 et 25°C, et une chaleur de fusion d'au moins 5 J/g, de préférence d'au moins 20 J/g, et
(b) a une perméabilité vis-à-vis d'au moins un gaz parmi l'oxygène et le dioxyde de carbone qui augmente d'un facteur d'au moins 2,5, de préférence d'au moins 3, sur une plage de température de 10°C entre 0 et 40°C.

10. Utilisation, pour l'emballage d'un matériau biologique qui respire de façon active et qui est choisi parmi des aliments et des fleurs, d'un conteneur comprenant une ou plusieurs zones de passage obligé pour les échanges d'oxygène, de dioxyde de carbone et de vapeur d'eau entre l'air ambiant et le conteneur, au moins une desdites zones étant une première zone
(a) qui est composée d'un matériau polymère comprenant un polymère cristallin présentant une température de transition du premier ordre Tₘ de -10°C à 40°C et une chaleur de fusion d'au moins 5 J/g,
(b) à travers laquelle l'oxygène, le dioxyde de carbone et la vapeur d'eau peuvent passer, et
(c) qui a une perméabilité vis-à-vis d'au moins un gaz parmi l'oxygène de le dioxyde de carbone qui augmente d'au moins un facteur de 2,5, de préférence d'au moins 3 sur une plage de température de 10°C entre 0 et 40°C.
